Europäisches Patentamt

European Patent Office

Office européen des brevets

(11) Publication number: **0 129 326**
**B1**

# EUROPEAN PATENT SPECIFICATION

(45) Date of publication of patent specification: **03.05.89**

(51) Int. Cl.⁴: **B 65 D 77/12,** B 65 B 7/06

(21) Application number: **84303305.1**

(22) Date of filing: **16.05.84**

(54) **Non tearing sealed vacuum container.**

(30) Priority: **20.05.83 US 496770**
**29.02.84 US 584587**

(43) Date of publication of application:
**27.12.84 Bulletin 84/52**

(45) Publication of the grant of the patent:
**03.05.89 Bulletin 89/18**

(84) Designated Contracting States:
**AT BE CH DE FR GB IT LI LU NL SE**

(56) References cited:
**US-A-2 373 285**
**US-A-3 001 689**
**US-A-3 913 789**
**US-A-4 098 406**

(73) Proprietor: **FRES-CO SYSTEM USA, INC.**
**10 State Road**
**Telford Pennsylvania 18969 (US)**

(72) Inventor: **Goglio, Luigi**
**Via Frua 11**
**I-20146, Milan (IT)**

(74) Representative: **Shaw, Laurence**
**George House George Road**
**Edgbaston Birmingham B15 1PG (GB)**

**Description**

This invention relates generally to containers and, more particularly, to containers formed of flexible sheet materials, especially to contain air-perishable products, e.g. foodstuffs, etc. under vacuum.

Known flexible, air-tight containers are commonly made of plastic film, metal foil, or combinations thereof, in one or more plies and sealed along one or more seams. Such containers are usually vacuumised after filling but prior to sealing so that the contents of the container are not exposed to air. Accordingly, products held in such containers can have a shelf life comparable to that in rigid containers, such as jars with screw-on lids or metal cans. While prior art air-tight, flexible containers have many advantages over rigid containers, e.g. take up less space and weight, they still have not proved a completely acceptable alternative to rigid containers particularly because they cannot be resealed after the initial opening. The seams are usually formed by heat sealing or welding. Thus, the known flexible container is opened by cutting or tearing one or more of its seams. Because of the permanent nature of the sealed seams, the deliberate tearing of any seam to gain access to the contents of the container not only destroys the seal but frequently causes tearing of the material of the container contiguous with the seam. This can make it impossible to reseal the container. If the container is opened by cutting off the top below the heat seal line, while the wall portions forming the container are not torn (thus permitting reclosure), the volumetric capacity of the container is reduced.

Flexible packaging containers including tear strips and/or tear lines to facilitate opening of the container, are known see e.g. US—A—3,186,628 US—A—3,535,409, US—A—3,939,972 and US—A—4,098,406 (which is US—B—30726).

US—A—2,373,285 discloses a bag made of a material comprising an outer metallic layer, an intermediate layer of paper and an inner layer of thermoplastic material which is heat sealed to itself to form a temporary seal. In such a bag the presence of the paper layer causes distortion and leads to an inadequate temporary seal.

It is one object of this invention to provide a container which can be filled with contents, vacuumised and heat sealed and then opened by hand without a serious risk of tearing the container wall so that the volumetric capacity of the container is unaffected, and which can then be resealed.

The invention provides a container to contain an air perishable substance under vacuum, e.g. a foodstuff, the container being folded from a sheet of flexible plastics material and heat sealed along its edges, the container having a mouth through which the container will be filled and which is then heat sealed, a strip of material being located below the mouth of the container on the inside walls of the container to form a substantially air tight seal after the container has been filled, the strip including two portions facing each other, each portion being formed of two layers of plastic material, with the facing layers of the portions being releasably heat sealed together but which can be pulled apart to open the mouth of the container without tearing the wall thereof characterised in that the strip includes a facing layer formed of a blend of polyethylene and ionomer.

The blend of polyethylene and ionomer is disclosed in US—A—4,098,406 where the blend is formed into a pouch by extruding the polyethylene/ionomer blend into a continuous tubular film which exhibits a linear tear property in the machine direction. By linear tear property, it is meant that the material has the inherent property to tear readily by hand along the substantially straight line by a normal shearing or parting motion without the need for guiding the tear. The tubular film is then slit longitudinally, cut into transverse sections, and heat sealed adjacent the transverse cuts to form a bag or pouch having an open top end. After the pouch is filled, the open top end is heat sealed to close the pouch. By virtue of the orientation of the film, the resulting pouch exhibits a linear tear property across its top end. To facilitate the opening of the pouch across its top, one edge of the pouch adjacent the top is slit or nicked to provide a starter tear. Thus, opening of the pouch is accomplished by tearing the top off the pouch. In contrast, in the invention, the strip is disposed within the container and no cut or slit need be present to start the peeling which is achieved by a rectilinear axial force applied to the container.

In one preferred embodiment, the strip comprises a layer of the blend of polyethylene and ionomer, the blend having been formed by co-extrusion, and on top of a layer of polyethylene heat sealed to the inside wall of the container.

The flexible sheet material can be made of any commercially available flexible material such as polyethylene, polyester, polypropylene, metal foil, and combinations thereof in single or multiple plies, and preferably cellophane-polyethylene.

In order that the invention may be well understood, it will now be described by way of example with reference to the accompanying diagrammatic drawings, in which

Figure 1 is a perspective view of one bag of the invention prior to filling and sealing;

Figure 2 is an enlarged section of the bag of Figure 1 but filled and sealed, and taken along line II—II of Figure 1;

Figure 3 is a section taken along line III—III of Figure 2;

Figure 4 is an enlarged section of a portion of the bag shown within the encircled area in Figure 2;

Figure 5 is a schematic perspective view of a system for forming the bag shown in Figures 1 to 4;

Figure 6 is a section of another bag of the invention;

Figure 7 is a perspective view of apparatus for filling and sealing a bag of the invention;

2

Figure 8 is an exploded perspective view, partially in section, showing a pair of heat sealing jaws of the apparatus shown in Figure 7;

Figure 9 is a cross-sectional view of the jaws of the apparatus shown in Figure 7 immediately prior to sealing the mouth of the bag shown in Figure 6; and

Figure 10 is a view similar to Figure 9 during the sealing operation.

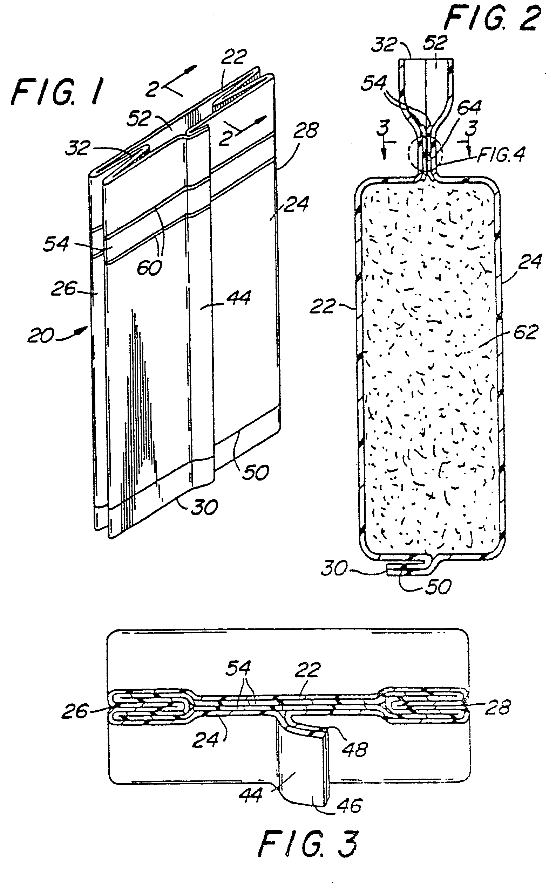

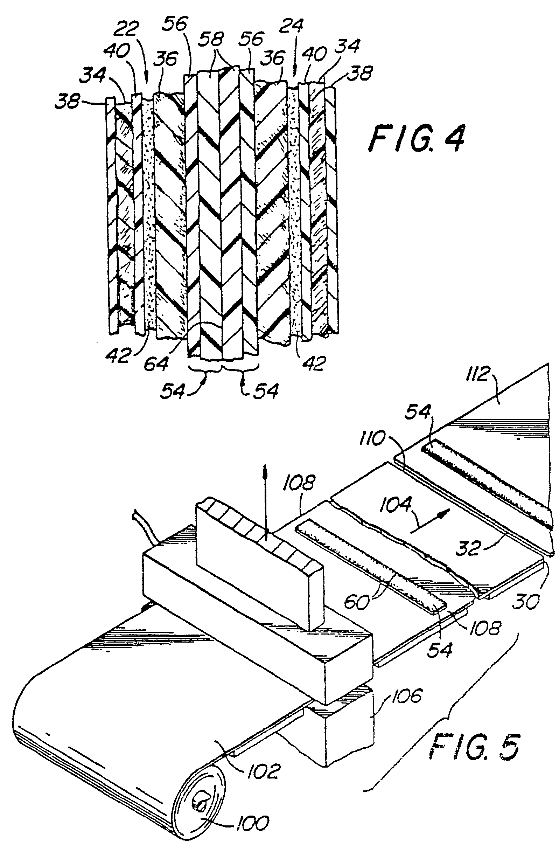

A bag 20 shown in Figures 1 to 4 comprises a front wall 22, a rear wall 24, gussetted sidewalls 26 and 28, a bottom end 30, and a top end 32. The walls are formed of a single sheet of flexible material which has been folded and sealed as will be described later. As shown in Figure 4 the sheet material of the bag 20 consists of two plies, a cellophane ply 34 and a polyethylene ply 36. The outer surface of cellophane ply 34 has a polyvinylidene chloride coating 38, and the inner surface includes a polyvinylidene chloride coating 40. The coated cellophane ply 34 is secured to the polyethylene ply 36 by an adhesive layer 42.

As can be seen in Figure 1, the sheet material has been folded so that the rear wall 24 of the bag 20 includes a longitudinally extending (vertical) seam 44 formed by the marginal edges 46 and 48. The edges 46 and 48 are permanently sealed together, e.g. by heat sealing, welding, etc. The bottom end 30 of the bag is similarly sealed closed along a permanent seam line 50. The bag has an open top end or mouth 52.

The bag 20 includes peel strip means 54, secured to the inside wall of the bag below the mouth 52 for sealing and closing the mouth 52 of the bag. The strip 54 is formed of material which can be secured to itself via heat sealing or welding to provide an air-tight interface, but which can be readily peeled apart by hand at its interface without destroying the material thereof. The material for the strip 54 consists of a blend of polyethylene and an ionomer, preferably that sold by E. I. DuPont De Nemours & Company under the trade mark "Surlyn 1601" such as described in Reissue Patent No. 30,726B the disclosure of which is incorporated by reference herein. Other ionomers disclosed in that patent or having similar characteristics to those disclosed therein may also be used. Preferably the peel strip means 54 consists of a coextrusion (i.e., a two-layer construction), an inner ply 56 formed of polyethylene and the outer ply 58 being a polyethylene-Surlyn blend. The strip 54 completely encircles the inner surface of the bag forming the container below the mouth 52 but does not extend into the seam 44 to maintain the integrity of the seam when the container is later opened. The peel strip 54 is secured in place by a pair of longitudinally extending peripheral heat seals or welds 60 (Figure 1) or adhesive. The strip 54 is located a substantial distance below the top of the bag to provide a fold or mechanical securement area for reclosure of the bag after the peel strip 54 has been opened. Each heat seal or weld is located parallel and closely adjacent the respective edge of the strip 54 and is produced as described later.

After the bag has been filled with the desired contents 62 and the air evacuated, the opposed peel strip surface portions 58 are brought into engagement with each other (as shown in Figures 3 and 4) and heat sealed to form a releasable air-tight yet weak interfacial seal 64 (Figure 2). This interfacial seal, while air-tight, can readily be peeled open by hand without damaging the strips 58 or the walls 22, 24, 26 and 28 by the application of a force at the top end 32 to separate the front wall 22 from the rear wall 24 which peels the abutting surfaces 58 apart along the interface 64 in a clean manner. Accordingly, one can readily gain access to the contents 62, e.g. ground coffee, of the bag 20. Because the bag is undamaged the useful volumetric capacity of the bag is unchanged and one can readily reclose the bag (although not with an air-tight seal), by merely bringing the mouth's wall surfaces 22, 24, 26 and 28 into engagement, folding the top edge of those surfaces over and holding the folded edges in place with mechanical means, e.g. a tie or band (not shown) which can be incorporated into the bag wall adjacent the mouth.

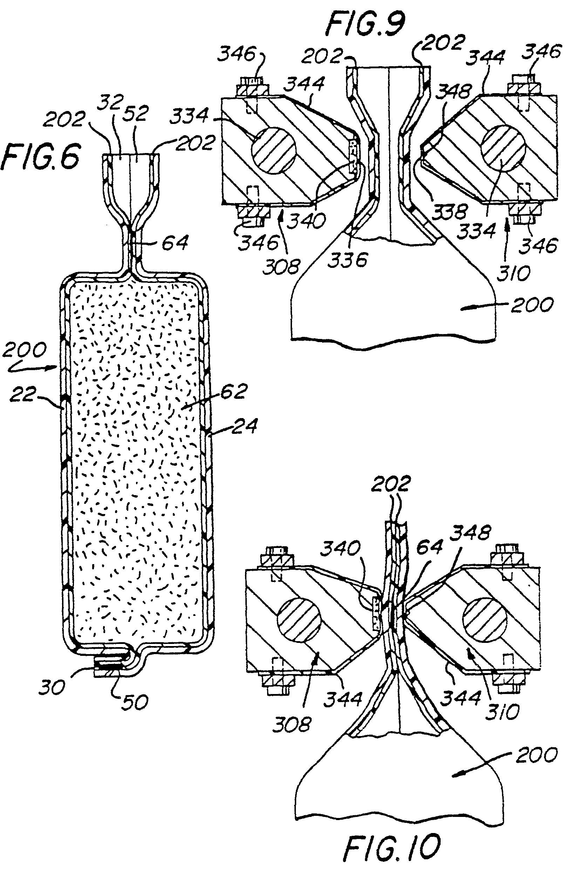

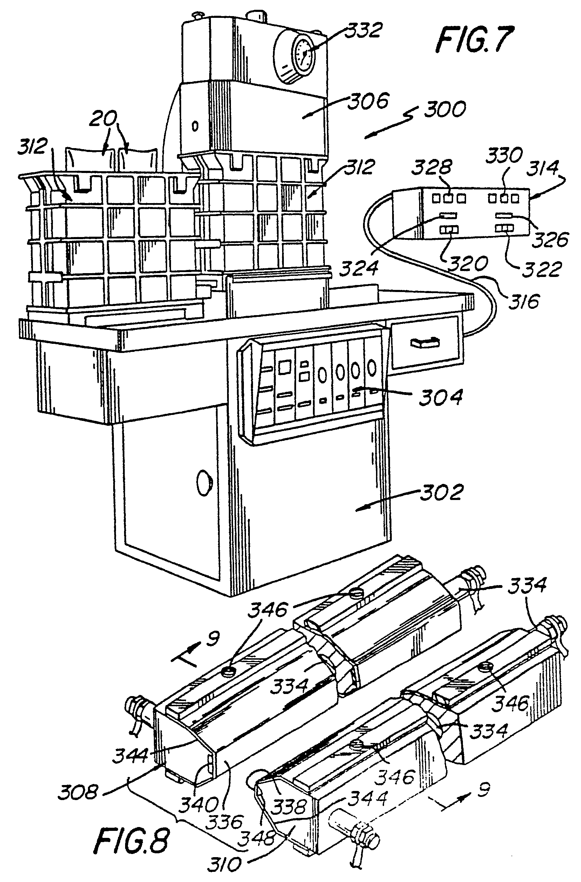

The apparatus shown schematically in Figure 5 is for forming a bag according to Figures 1 to 4 and comprises a roll 100 of the sheet material forming the bag walls. The material is reeled off the roll in a web 102, which web is carried longitudinally in the direction of arrow 104 past peel strip application station 106. The peel strip application station 106 is arranged to apply peel strips 54 at equidistantly spaced locations along the passing web 102. Each strip 54 extends substantially the entire width of the web 102 except for opposite marginal edge portions 108 which will form the edge portions 46 and 48 of the vertical seam 44 of the bag. Each strip 54 is secured to the web 102 by heat sealing it along the parallel heat seal lines 60 at station 106. The web is then severed across its full width at a cut line 110. The cut line 110 serves to divide the web 102 into sections 112, each of which is then folded into a container 20. Thus, the cut line 110 forms the top edge 32 of the section 112 forming one container and a bottom edge 30 of the section 112 forming the next succeeding container. Each cut section 112 of the web is supplied to a folding station (not shown) which forms the section into a tube by bringing the marginal edges 108 of each section into engagement with each other to form and heat seal or weld the seam 44 which is then heat sealed or welded. The resulting tubular construction is heat sealed or welded along seam 50 adjacent its bottom edge 30 to complete an open bag like that shown in Figure 1. The bag 20 may be removed from the apparatus and is separately shipped to a processor for subsequent filling and sealing. Alternatively, the system forming the container may fill it and seal it in one operation. Thus, the bag 20 is filled with its contents 62 and vacuumized. The peel strip means 54 is then closed and hermetically sealed to isolate the contents 62 from the ambient atmosphere. The top edge 32 is then folded down or left upright, as desired.

The sealing operation can be done by placing the bag between opposed heated jaws in which, where the bag to be sealed is of the gussetted type (in which there are more over-lapped layers at the sides than at the middle of the bag and as shown in Figure 3), one jaw is resilient and one non-resilient to apply an even pressure across the bag during the sealing operation. We have determined by a series of evaluations that

3

the heat sealing operation is preferably done under the following conditions. For a 3.2 mm wide seal and at a pressure of 420 to 450 psi the surface temperature of the jaws is

| Resilient jaw | Non-resilient jaw | Two resilient jaws |
|---|---|---|
| 150°C—185°C | 130°C—145°C | 134°C—136°C |

and the respective dwell time is

| | | |
|---|---|---|
| 3 to 6.5 seconds | | about 3 seconds |

The bag 200 of Figure 6 differs from the bag 20 in that the inner layer of the bag comprises a complete layer 202 formed of the same material as strip 54 of Figure 1 and the interface 64 is formed by abutting portions of the layer 202 where required. The permanent seams of the bag 200, that is, the vertical rear wall seam (not shown) and the horizontal bottom wall seam 50, are formed by sealing the seams in those locations at higher temperatures than required for the peelable seal.

Apparatus 300 for filling and sealing bags 20, 200 is shown in Figure 7 and comprises a vacuum packing machine, such as model GL 9 sold by Goglio-Luigi—Milano—S.p.A. of Milan, Italy and which has modified heat sealing jaws and an auxiliary control panel (both to be described later). The vacuum packaging machine 300 comprises a base table 302 on the front wall of which a control panel 304 is mounted. Disposed above the table is a sealing head 306 in which a pair of heat sealing jaws 308 and 310 (Figure 8) are disposed. The apparatus 300 includes vacuum chambers 312 which are arranged to support bags to be filled with a material to be sealed therein, e.g. ground coffee. The chambers are arranged to co-operate with the head 306 to evacuate air from the bags being sealed. Apparatus 300 also includes an additional or auxiliary control panel 314. The auxiliary control panel 314 is connected via a cable 316 to the apparatus 300 and includes controls for individually adjusting the temperature of each of the sealing jaws 308 and 310 by the setting of respective digital temperature dial switches 320 and 322 of control 314. Analog temperature indicators 324 and 326 on the front panel of the control 314 display the temperature of the associated jaws. Indicator lamps 328 and 330 are provided in control panel 314. The electrical connections and the hydraulic components of the system are located within the base table 302. A vacuum gauge 332 is located on the head 306 to display existing vacuum within the chambers 312.

As shown in Figure 8, each jaw 308 and 310 comprises an elongate metal bar through which extends an elongate electrical cartridge heater 334 of the type known in the U.S.A. as a cartridge heater. The heater is in thermal engagement with the body of the bar so that there is a good thermal transfer and the bar temperature can be controlled precisely. The bar temperatures are set by associated temperature switches 320 and 322 on control panel 314. The bar 308 includes a tapered inner surface terminating in a planar working face 336 and the bar 310 includes a tapered front face terminating in a working front face 338. The working face 338 is substantially narrower than working face 336 and working face 338 is non-resilient while working face 336 is resilient because a rubber strip 340 extends down a channel 342 along the full length of the jaw 308. A covering of Teflon coated glass fabric 344 is disposed over the face 336 of jaw 308 and is held in place by fasteners 346. The jaw 310 is also covered by a Teflon coated glass fabric 344 which is held in place by fasteners 346 in the same manner as described with reference to jaw 308. The narrow front face 338 includes a V-shaped notch 348 extending down the length thereof.

Operation of the jaws to seal the mouth of the bag 200 to form the peelable interface 64 is shown in Figures 9 and 10. The portion of the container 200 adjacent the mouth is disposed between the jaws 308 and 310 as shown in Figure 9. The jaws are then brought together to squeeze the opposing portions of the bag into engagement with each other as shown in Figure 10. This action causes the resilient jaw to "give" slightly opposite the non-resilient jaw to ensure that even pressure is applied thereacross. The resilient jaw ensures that a proper seal is effected across the entire bag, despite the presence of the additional folds caused by the gussetts at the sides of the bag.

## Claims

1. A container (20, 200) to contain an air perishable substance (62) under vacuum, e.g. a foodstuff, the container (20, 200) being folded from a sheet of flexible plastics material and heat sealed along its edges, the container having a mouth (52) through which the container will be filled and which is then heat sealed, a strip (54, 202) of material being located below the mouth (52) of the container (20, 200) on the inside walls of the container to form a substantially air tight seal (64) after the container (20, 200) has been filled (62), the strip (54, 202) including two portions facing each other which are releasably heat sealed together but can be pulled apart to open the mouth (52) of the container (20, 200) without tearing the wall (22, 24) thereof characterised in that the portions of the strip (54, 202) facing each other are formed of a blend of polyethylene and ionomer.

2. A container according to Claim 1, characterised in that the seal (64) is provided by a preformed strip (54) which is heat sealed to the inner walls (22, 24) of the container.

3. A container according to Claim 2 characterised in that the strip (54) comprises a layer of polyethylene (56) and a layer (58) of a blend of polyethylene and ionomer, the layers of the blend having been formed by co-extrusion, and the layer of polyethylene (56) is heat sealed to the inside wall of the container (20).

4. A container according to Claim 2 or 3 characterised in that the container has a seam (44) and the strip (54) does not extend into the seam (44).

**Patentansprüche**

1. Behälter (20, 200) für die Aufnahme einer luftverderblichen Substanz (62) unter Vakuum, z.B. eines Nahrungsmittels, wobei der Behälter (20, 200) aus einer Bahn aus flexiblem Kunststoffmaterial gefalzt wird und an seinen Kanten entlang heißversiegelt wird, eine Öffnung (52) zur Befüllung aufweist, die anschließend wärmeversiegelt wird, sowie einen Streifen (54, 202) eines Materials, das unterhalb der Öffnung (52) des Behälters (20, 200) auf den Innenwänden des Behälters so angeordnet ist, daß ein in wesentlichen luftdichter Verschluß (64) nach dem Einbringen der Füllung (62) des Behälters (20, 200) erhalten wird, wobei der Streifen (54, 202) zwei sich gegenüberliegende Bereiche aufweist, die lösbar miteinander heißversiegelt werden, sich jedoch zur Öffnung der Beutelöffnung (52) des Behälters (20, 200) wieder voneinander lösen lassen, ohne daß die Wand (22, 24) desselben eingerissen wird, dadurch gekennzeichnet, daß die sich gegenüberliegenden Streifenteile (54, 202) aus einer Mischung von Polyäthylen und Ionomer gebildet werden.

2. Behälter gemäß Anspruch 1, dadurch gekennzeichnet, daß die Dichtung (64) durch einen vorgeformten Streifen (54) gebildet wird, der gegen die Innenwände (22, 24) des Behälters wärmeversiegelt wird.

3. Behälter gemäß Anspruch 2, dadurch gekennzeichnet, daß der Streifen (54) aus einer Polyäthylenlage (56) und einer Lage (58) aus einer Mischung aus Polyäthylen und Ionomer besteht, wobei die Mischungslage durch Koextrudierung gebildet worden, während die Polyäthylenlage (56) gegen die Innenwand des Behälters (20) heißversiegelt wird.

4. Behälter gemäß Anspruch 2 oder 3, dadurch gekennzeichnet, daß der Behälter eine Naht (44) aufweist, und daß der Streifen (54) nicht in die Naht (44) hineinreicht.

**Revendications**

1. Un emballage (20, 200) destiné à contenir une denrée périssable à l'air (62) sous vide, par ex. des aliments, l'emballage (20, 200) étant plié à partir d'une feuille souple de matière plastique dont les bords sont thermoscellés sur toute la longueur du sac, l'emballage ayant une ouverture (52) permettant de remplir le sac et de le thermosceller par la suite, avec une bande (54, 202) d'un matériau spécial située sous l'ouverture (52) de l'emballage (20, 200) et sur les parois intérieures de l'emballage afin d'obtenir une fermeture complètement hermétique (64) une fois que l'emballage (20, 200) a été rempli (62), la bande comportant (54, 202) deux parties se faisant face qui sont thermoscellées ensemble et peuvent être décollées pour ouvrir le haut (52) de l'emballage (20, 200) sans déchirer la paroi (22, 24) et dont la principale caractéristique est que les parties de la bande (54, 202) se faisant face sont composées d'un mélange de polyéthylène et d'un ionomère.

2. Un emballage selon la Revendication 1 caractérisé par le fait que la fermeture (64) s'effectue à l'aide d'une bande profilée (54) qui est thermoscellée aux parois intérieures (22, 24) de l'emballage.

3. Un emballage selon la Revendication 2 caractérisé par le fait que la bande (54) est composée d'une couche de polyéthylène (56) et d'une couche (58) d'un mélange de polyéthylène et d'un ionomère, les couches du mélange ayant été formées par coextrusion et la couche de mélange de polyéthylène (56) ayant été thermoscellée contre la paroi intérieure de l'emballage (20).

4. Un emballage selon la Revendication 2 ou 3, caractérisé par le fait que l'emballage possède une couture (44) et que la bande (54) ne se prolonge pas jusque dans la couture (44).

FIG. 1

FIG. 2

FIG. 3

FIG. 4

FIG. 5

FIG.6

FIG.9

FIG.10

EP 0 129 326 B1

FIG.7

FIG.8